# EUROPÄISCHE PATENTSCHRIFT

(11) **EP 1 277 800 B1**
(45) Veröffentlichungstag und Bekanntmachung des Hinweises auf die Patenterteilung: **06.10.2004**
(21) Anmeldenummer: 02014924.1
(22) Anmeldetag: 08.07.2002
(51) Int. Cl.: C08L 69/00

(54) **Polycarbonat-Blends**
Polycarbonate blends
Mélanges de polycarbonates

(30) Priorität: 20.07.2001 DE 10135465
(43) Veröffentlichungstag der Anmeldung: 22.01.2003
(73) Patentinhaber: Bayer MaterialScience AG, 51368 Leverkusen (DE)
(72) Erfinder: Kratschmer, Silke, Dr., 47829 Krefeld (DE); Horn, Klaus, Dr., 41539 Dormagen (DE); Erkelenz, Michael, 47239 Duisburg (DE)

(56) Entgegenhaltungen:
- EP-A- 0 544 407
- DE-A- 10 047 483

## Beschreibung

Gegenstand der vorliegenden Erfindung ist die Verwendung spannungsrissbeständiger, schlagzäher Polycarbonat-Blends mit besonders guten Tieftemperatureigenschaften, für Anwendungen, in denen besonders gute Tieftemperatureigenschaften gefragt sind, z. B. für den Automobilbau oder Außenanwendungen, diese neuen Polycarbonat-Blends selbst sowie Formkörper und Extrudate aus diesen Polycarbonat-Blends.

Für den Automobilbau und andere Außenanwendungen werden seit langem möglichst chemikalienresistente und vorzugsweise transparente Polycarbonate gesucht, die einerseits tieftemperaturbeständig sind, andererseits eine hohe Thermostabilität aufweisen. Man benötigt demnach transparente Polycarbonate, die einerseits verbesserte Tieftemperaturzähigkeit im Vergleich zu Polycarbonat aus reinem 2,2-Bis(4-hydroxyphenyl)propan zeigen, andererseits erhöhte Thermostabilität aufweisen, bei verbessertem Spannungsrissverhalten.

Es wurden nun bereits Copolycarbonate auf Basis von 4,4'-Dihydroxydiphenyl und 2,2-Bis(4-hydroxyphenyl)propan aus JP-A 5117382 bekannt und in EP-A1 0 544 407, US-A 5470938, US-A 5532324 und US-A 5401826 als besonders chemikalienresistent, hitzebeständig und schwer entflammbar beschrieben, bei, im Vergleich zu handelsüblichem Polycarbonat aus reinem Bisphenol, gleichen mechanischen Eigenschaften und Transparenz.

In der deutschen Anmeldung Nr. DE 10047483.7 werden Copolycarbonate aus 4,4'-Dihydroxydiphenyl und 2,2-Bis(4-hydroxyphenyl)propan (Bisphenol A) beschrieben, die besonders gute Tieftemperatureigenschaften aufweisen. Es wird jedoch auch beschrieben, dass die guten Tieftemperatureigenschaften mit abnehmendem Gehalt an 4,4'-Dihydroxydiphenyl sinken. Da 4,4'-Dihydroxydiphenyl jedoch ein teurer Baustein im Vergleich zu 2,2-Bis(4-hydroxyphenyl)propan ist, besteht aus Kostengründen der Wunsch, den Gehalt an 4,4'-Dihydroxydiphenyl so gering wie möglich zu halten, ohne die gewünschte Verbesserung der Tieftemperaturzähigkeit einzubüßen.

Die Aufgabe bestand also darin, die zur Herstellung einer bestimmten Menge des Polycarbonates notwendige Menge an 4,4'-Dihydroxydiphenyl (DOD), bzw. Verbindungen der Formel (I), zu reduzieren, ohne dabei die gewünschten Eigenschaften des Polycarbonates zu verlieren.

Es wurde nun überraschenderweise gefunden, dass man Blends aus Copolycarbonaten, die DOD bzw. Verbindungen der Formel (I) enthalten, und Polycarbonat aus reinem Bisphenol A herstellen kann, welche, bei geringerer Einsatzmenge an DOD bzw. Verbindungen der Formel (I), bezogen auf die Menge des Endprodukts, die gewünschten Eigenschaften des Copolycarbonates (A) unverändert aufweisen.

Dies ist insbesondere erstaunlich, als man bei der Herstellung von Blends im allgemeinen keine Voraussagen treffen kann, welche Eigenschaften ein Blend schlussendlich aufweisen wird. Die Eigenschaften der Ausgangspolymere können sich verstärken, auslöschen, verändern (in jeder Richtung), u.U. können die Ausgangspolymere gar nicht homogen mischbar sein etc. Kurz gesagt, es ist keine Vorhersage möglich und ein Ergebnis wie das vorliegende ist in keiner Weise naheliegend, sondern im Gegenteil höchst überraschend.

Die vorliegende Erfindung betrifft daher die Verwendung von Polycarbonat-Blends, enthaltend 1 bis 99 Gew.-% Copolycarbonat (A), das aus 0,1 mol-% bis 46 mol-%, vorzugsweise aus 11 mol-% bis 34 mol % und insbesondere aus 26 mol-% bis 34 mol-% Verbindungen der Formel (I), 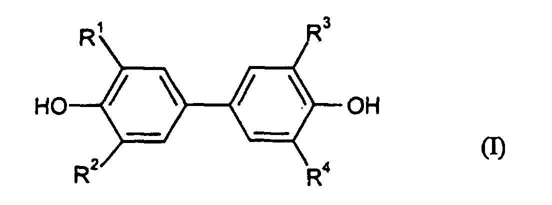 worin R¹ bis R⁴ unabhängig voneinander für H, C₁-C₄-Alkyl, Phenyl, substituiertes Phenyl oder Halogen stehen, bevorzugt für H, C₁-C₄-Alkyl oder Halogen stehen und besonders bevorzugt alle für den gleichen Rest, insbesondere für H oder tert.-Butyl stehen, und komplementären Mengen, also 99,9 mol-% bis 54 mol-%, vorzugsweise 89 mol-% bis 66 mol-% und insbesondere 74 mol-% bis 66 mol-% an Verbindungen der Formel (II) 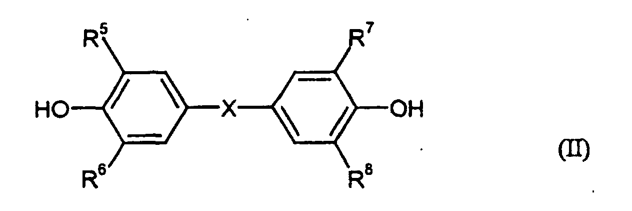 worin R⁵ bis R⁸ unabhängig voneinander H, CH₃, Cl oder Br sind und X C₁-C₅-Alkylen, C₂-C₅-Alkyliden, C₅-C₆-Cycloalkylen, C₅-C₁₀-Cycloalkyliden ist, als Bisphenol-Monomere aufgebaut sind, und 1 bis 99 Gew.% reinem Bisphenol A-Polycarbonat (B), als Werkstoffe in Bereichen, in denen besonders gute Tieftemperatureigenschaften gefragt sind. Bevorzugte Mischungen des Copolymers (A) mit dem Bisphenol A-Polycarbonat (B) sind 30 bis 95 Gew.% (A), ganz besonders bevorzugt 40 bis 95 Gew.% (A) mit entsprechend komplementären Mengen reinem Bisphenol A-Polycarbonat (B).

Ganz besonders bevorzugt und selbst Erfindungsgegenstand sind Mischungen aus Bisphenol A-Polycarbonat (B) mit Copolycarbonaten (A), wobei die Copolycarbonate (A) aus 34-26 mol-%, speziell 33-27 mol-%, insbesondere 32-28 mol-%, ganz speziell 31-29 mol-% und besonders herausgehoben 30 mol-% an Bisphenol-Monomer der Formel (I) aufgebaut sind, jeweils durch einen komplementären Gehalt an Bisphenol-Monomer der Formel (II) ergänzt.

Die Prozentangaben der Bisphenol-Monomere beziehen sich auf den auf 100 % definierten Gesamtgehalt der Polycarbonate an Bisphenolen. Ein reines Bisphenol A Polycarbonat bestünde dann aus 100 % Bisphenol A. Der Carbonatanteil aus Kohlensäureestem oder - Halogeniden wird dabei nicht mit berücksichtigt.

Bevorzugt, besonders bevorzugt oder ganz besonders bevorzugt sind Blends, welche die unter bevorzugt, besonders bevorzugt oder ganz besonders bevorzugt genannten Zusammensetzungen aufweisen.

Die oben aufgeführten allgemeinen oder in Vorzugsbereichen aufgeführten Definitionen, Mengenverhältnisse bzw. Erläuterungen können jedoch auch untereinander, also zwischen den jeweiligen Bereichen und Vorzugsbereichen beliebig kombiniert werden. Sie gelten für die Endprodukte sowie für die Vor- und Zwischenprodukte entsprechend.

Es hat sich nun überraschenderweise gezeigt, dass die erfindungsgemäßen Polycarbonat-Blends noch gute Tieftemperatureigenschaften aufweisen. Dies ist insbesondere deshalb überraschend, da Blends, die nur einen geringen Anteil an Bisphenol-Monomer (I) enthalten, sogar bessere Tieftemperatureigenschaften aufweisen als die entsprechenden reinen Copolycarbonate (A) mit gleichem Anteil an (I).

Die Blends sind daher als Formkörper überall dort einsetzbar, wo die bislang bekannten Polycarbonate in ihrem Eigenschaftsbild nicht ausreichend sind, insbesondere z. B. im Elektrosektor sowie im Bausektor, für Abdeckungen oder Verglasungen, insbesondere im Kraftfahrzeugbereich als Folien, Platten, Armaturenteile oder Gehäuseteile, aber auch im optischen Bereich als Linsen und Datenspeicher sowie als Gebrauchsartikel, und zwar dann, wenn erhönte Wärmeform- oder Chemikalienbeständigkeit bei gleichzeitig guten Tieftemperatureigenschaften verlangt werden. Daneben können sie auch in solchen Anwendungen andere Werkstoffe ersetzen, in denen gewöhnliche Polycarbonate bisher auf Grund ihrer dafür nicht ausreichenden Tieftemperatureigenschaften nicht eingesetzt werden konnten.

Unter guten Tieftemperatureigenschaften ist erfindungsgemäß beispielhaft aber nicht einschränkend eine gute Tieftemperaturzähigkeit zu verstehen, da gewöhnliche Polycarbonate bei tiefen Temperaturen spröde werden, und damit zum Brechen und Reißen neigen.

Unter tiefen Temperaturen sind erfindungsgemäß Temperaturen unterhalb 0°C, besonders bevorzugt unterhalb -10°C, besonders bevorzugt unterhalb -20°C, ganz besonders bevorzugt unterhalb -30°C, insbesondere unterhalb -40°C und hervorgehoben unterhalb -50°C zu verstehen.

Bevorzugte Verbindungen der Formel (I) sind 4,4'-Dihydroxydiphenyl (DOD) und 4,4'-Dihydroxy-3,3',5,5'tetra(tert.-butyl)diphenyl, 4,4'-Dihydroxy-3,3',5,5'tetra(nbutyl)diphenyl und 4,4'-Dihydroxy-3,3',5,5'tetra(methyl)diphenyl, besonders bevorzugt ist 4,4'- Dihydroxydiphenyl.

Bevorzugte Verbindungen der Formel (II) sind 2,2-Bis(4-hydroxyphenyl)propan, 1,1-Bis(4-hydroxyphenyl)-3,3,5-trimethylcyclohexan und 1,3-Bis[2-(4-hydroxyphenyl)-2-propyl]benzol, 1,1-Bis(4-hydroxyphenyl)-1-phenylethan, 1,1-Bis(4-hydroxyphenyl)-cyclohexan, insbesondere 2,2-Bis(4-hydroxyphenyl)propan (Bisphenol A) und 1,1-Bis(4-hydroxyphenyl)-3,3,5-trimethylcyclohexan (Bisphenol TMC), ganz besonders bevorzugt 2,2-Bis(4-hydroxyphenyl)propan (Bisphenol A).

Das Copolycarbonat (A) kann sowohl eine Verbindung der Formel (I) als auch mehrere Verbindungen der Formel (I) enthalten.

Ebenso kann (A) sowohl eine Verbindung der Formel (II) als auch mehrere Verbindungen der Formel (II) enthalten.

Die Herstellung von (Co-)Polycarbonaten ist in der Literatur allgemein bekannt.

Zur Herstellung von Polycarbonaten nach dem Phasengrenzflächen- oder dem Schmelzeumsterungsverfahren sei beispielhaft auf "Schnell", Chemistry and Physics of Polycarbonates, Polymer Reviews, Vol. 9, Interscience Publishers, New York, London, Sydney 1964, S. 33 ff. und auf Polymer Reviews, Volume 10, "Condensation Polymers by Interfacial and Solution Methods", Paul W. Morgan, Interscience Publishers, New York 1965, Kap. VIII, S. 325 und EP-A 971790 verwiesen.

Gemäß DE-A 2 119 779 erfolgt die Herstellung von Copolycarbonaten unter Beteiligung von Monomeren der Formel (I) vorzugsweise in Lösung, und zwar nach dem Phasengrenzflächenverfahren und dem Verfahren in homogener Phase. Daneben ist deren Herstellung auch nach dem bekannten Polycarbonatherstellungsverfahren in der Schmelze (sogenanntes Schmelzeumesterungsverfahren) möglich, das z. B. in DE-A 19 64 6401 oder in DE-A 1 42 38 123 beschrieben ist. Daneben werden Umesterungsverfahren (Acetatverfahren und Phenylesterverfahren) beispielsweise in den US-A 3494885, 4386186, 4661580, 4680371, und 4680372, in den EP-A 26120, 26121, 26684, 28030, 39845, 91602, 97970, 79075, 146887, 156103, 234913 und 240301 sowie in den DE-A 1495626 und 2232977 beschrieben.

Die Polymere (A) und (B) können eventuell synthesebedingt Verunreinigungen enthalten. Eine hohe Reinheit ist aber wünschenswert und anzustreben, daher werden sie mit der höchst möglichen Reinheit für die Herstellung der Blends eingesetzt.

Die erfindungsgemäßen Polycarbonat-Blends können verschiedene Endgruppen enthalten. Diese werden durch Kettenabbrecher eingeführt. Kettenabbrecher im Sinne der Erfindung sind solche der Formel (III) 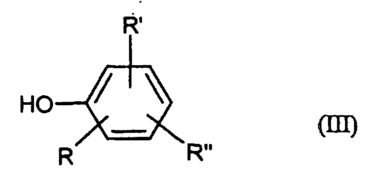 wobei R, R' und R" unabhängig voneinander H, gegebenenfalls verzweigte C₁-C₃₄-Alkyl/Cycloalkyl, C₇-C₃₄-Alkaryl oder C₆-C₃₄-Aryl darstellen können, beispielsweise Butylphenol, Tritylphenol, Cumylphenol, Phenol, Octylphenol, bevorzugt Butylphenol oder Phenol. Dabei kann das Copolycarbonat (A) sowohl die gleiche als auch eine andere Endgruppe als das Bisphenol A-Polycarbonat (B) enthalten.

Die einzelnen Polycarbonate (A) und (B) können unabhängig voneinander geringe Mengen von 0,02 bis 3,6 mol % (bezogen auf die Dihydroxyverbindung) an Verzweigem enthalten. Geeignete Verzweiger sind die für die Polycarbonatherstellung geeigneten Verbindungen mit drei und mehr funktionellen Gruppen, vorzugsweise solche mit drei oder mehr als drei phenolischen OH-Gruppen, beispielsweise 1,1,1-Tri-(4-hydroxyphenyl)ethan und Isatinbiskresol.

Zur Änderung der Eigenschaften können den erfindungsgemäßen Polycarbonat-Blends Hilfs- und Verstärkungsstoffe zugemischt werden. Als solche sind u. a. in Betracht zu ziehen: Thermo- und UV-Stabilisatoren, Fließhilfsmittel, Entformungsmittel, Flammschutzmittel, Pigmente, fein zerteilte Mineralien, Faserstoffe, z. B. Alkylund Arylphosphite, -phosphate, -phosphane, niedermolekulare Carbonsäureester, Halogenverbindungen, Salze, Kreide, Quarzmehl, Glas- und Kohlenstofffasern, Pigmente und deren Kombination. Solche Verbindungen werden z. B. in WO99/55772, S. 15 - 25, und in "Plastics Additives", R. Gächter und H. Müller, Hanser Publishers 1983, beschrieben.

Weiterhin können den erfindungsmäßen Polycarbonaten auch andere Polymere zugemischt werden, z. B. Polyolefine, Polyurethane, Polyester, Acrylnitrilbutadienstyrol und Polystyrol.

Der Zusatz dieser Stoffe erfolgt vorzugsweise auf herkömmlichen Aggregaten zum fertigen Polycarbonat, kann jedoch, je nach den Erfordernissen, auch auf einer anderen Stufe des Herstellverfahrens erfolgen.

Die verwendeten Polycarbonate (A) und (B) können Molekulargewichte zwischen Mw (gewichtsgemitteltes Molekulargewicht) 10.000 bis 60.000 aufweisen, bevorzugt Mw 20.000 bis 55.000, ermittelt durch Messung der relativen Lösungsviskosität in Dichlormethan oder in Mischungen gleicher Gewichtsmengen Phenol/o-Dichlorbenzol, geeicht durch Lichtstreuung. Sie können bereits Additive oder Stabilisatoren enthalten, wie sie auch den erfindungsgemäßen Blends zugemischt werden können.

Die erfindungsgemäßen Polycarbonat-Blends selbst sind ebenfalls Gegenstand der vorliegenden Anmeldung.

Die erfindungsgemäßen Polycarbonat-Blends sind bei Temperaturen von 240°C bis 380°C, vorzugsweise 260°C bis 360°C in üblicher Weise thermoplastisch verarbeitbar. Durch Spritzguss oder via Extrusion können beliebige Formkörper und Folien in bekannter Weise hergestellt werden. Formkörper und Extrudate aus den erfindungsgemäßen Polycarbonat-Blends sind ebenfalls Gegenstand der vorliegenden Anmeldung.

Die erfindungsgemäßen Polycarbonat-Blends sind in Lösungsmitteln wie chlorierten Kohlenwasserstoffen, z. B. Methylenchlorid, gut löslich und können somit beispielsweise in bekannter Weise zu Gießfolien verarbeitet werden.

Die Kombination von Eigenschaften wie Wärmeformbeständigkeit, gute Tieftemperatureigenschaften und Chemikalienbeständigkeit ermöglicht einen breiten Einsatz der erfindungsgemäßen Polycarbonat-Blends. Als mögliche Anwendungen der erfindungsgemäßen Blends seien hier beispielhaft aber keineswegs einschränkend,
1. Sicherheitsscheiben, die bekanntlich in vielen Bereichen von Gebäuden, Fahrzeugen und Flugzeugen erforderlich sind, sowie als Schilde von Helmen.
2. Herstellung von Folien, insbesondere Skifolien.
3. Herstellung von Blaskörpern (siehe beispielsweise US-Patent 2 964 794), beispielsweise 1 bis 5 Gallon Wasserflaschen.
4. Herstellung von lichtdurchlässigen Platten, insbesondere von Hohlkammerplatten, beispielsweise zum Abdecken von Gebäuden wie Bahnhöfen, Gewächshäusern und Beleuchtungsanlagen.
5. Herstellung optischer Datenspeicher.
6. Zur Herstellung von Ampelgehäusen oder Verkehrsschildern.
7. Zur Herstellung von Schaumstoffen (siehe beispielsweise DE-AS 1 031 507).
8. Zur Herstellung von Fäden und Drähten (siehe beispielsweise DE-AS 1 137 167 und DE-A 1 785 137).
9. Als transluzente Kunststoffe mit einem Gehalt an Glasfasern für lichttechnische Zwecke (siehe beispielsweise DE-A 1 554 020).
10. Als transluzente Kunststoffe mit einem Gehalt an Bariumsulfat, Titandioxid und oder Zirkoniumoxid bzw. organischen polymeren Acrylatkautschuken (EP-A 634 445, EP-A 269 324) zur Herstellung von lichtdurchlässigen und lichtstreunenden Formteilen.
11. Zur Herstellung von Präzisionsspritzgussteilchen, wie beispielsweise Linsenhalterungen. Hierzu verwendet man Polycarbonate mit einem Gehalt an Glasfasern, die gegebenenfalls zusätzlich etwa 1 - 10 Gew.-% MoS₂, bezogen auf Gesamtgewicht, enthalten.
12. Zur Herstellung optischer Geräteteile, insbesondere Linsen für Foto- und Filmkameras (siehe beispielsweise DE-A 2 701 173).
13. Als Lichtübertragungsträger, insbesondere als Lichtleiterkabel (siehe beispielsweise EP-A1 0 089 801).
14. Als Elektroisolierstoffe für elektrische Leiter und für Steckergehäuse sowie Steckverbinder.
15. Herstellung von Mobiltelefongehäusen mit verbesserter Beständigkeit gegenüber Parfüm, Rasierwasser und Hautschweiß.
16. Network interface devices
17. Als Trägermaterial für organische Fotoleiter.
18. Zur Herstellung von Leuchten, z. B. Scheinwerferlampen, als sogenannte "head-lamps", Streulichtscheiben oder innere Linsen.
19. Für medizinische Anwendungen, z.B. Oxygenatoren, Dialysatoren.
20. Für Lebensmittelanwendungen, wie z. B. Flaschen, Geschirr und Schokoladenformen.
21. Für Anwendungen im Automobilbereich, wo Kontakt zu Kraftstoffen und Schmiermitteln auftreten kann, wie beispielsweise Stoßfänger ggf. in Form geeigneter Blends mit ABS oder geeigneten Kautschuken.
22. Für Sportartikel, wie z. B. Slalomstangen oder Skischuhschnallen.
23. Für Haushaltsartikel, wie z. B. Küchenspülen und Briefkastengehäuse.
24. Für Gehäuse, wie z. B. Elektroverteilerschränke.
25. Gehäuse für Elektrozahnbürsten und Föngehäuse
26. Transparente Waschmaschinen - Bullaugen mit verbesserter Beständigkeit gegenüber der Waschlösung.
27. Schutzbrillen, optische Korrekturbrillen.
28. Lampenabdeckungen für Kücheneinrichtungen mit verbesserter Beständigkeit gegenüber Küchendunst, insbesondere Öldämpfen.
29. Verpackungsfolien für Arzneimittel.
30. Chip-Boxen und Chip-Träger
31. Für sonstige Anwendungen, wie z. B. Stallmasttüren oder Tierkäfige, genannt.

Insbesondere können aus den hochmolekularen aromatischen Polycarbonat-Blends der Erfindung Folien hergestellt werden. Die Folien haben bevorzugte Dicken zwischen 1 und 1500 µm, insbesondere bevorzugte Dicken zwischen 10 und 900 µm. Die erhaltenen Folien können in an sich bekannter Weise monoaxial oder biaxial gereckt werden, bevorzugt im Verhältnis 1:1,5 bis 1:5.

Die Folien können nach den bekannten Verfahren zur Folienerzeugung hergestellt werden, z. B. durch Extrusion einer Polymerschmelze durch eine Breitschlitzdüse, durch Blasen auf einer Folienblasmaschine, durch Tiefziehen oder Gießen. Dabei ist es möglich, dass die Folien für sich allein verwendet werden. Man kann mit ihnen natürlich auch nach den herkömmlichen Verfahren Verbundfolien mit anderen Kunststoff-Folien herstellen, wobei prinzipiell, je nach gewünschter Anwendung und Endeigenschaft der Verbundfolie, alle bekannten Folien als Partner in Frage kommen. Es kann ein Verbund aus zwei oder mehr Folien erzeugt werden.

Daneben können die erfindungsgemäßen Polycarbonat-Blends auch in anderen Schichtsystemen Anwendung finden, wie z. B. in coextrudierten Platten.

Die nachfolgenden Beispiele sollen die vorliegende Erfindung illustrieren, ohne sie jedoch einzuschränken:

### Beispiele

Nach den bekannten Herstellverfahren in der Schmelze, wie beispielsweise in DE 4 238 123 beschrieben, und über die Phasengrenzfläche, wie zum Beispiel in "Schnell", Chemistry and Physics of Polycarbonates, Polymer Reviews, Vol. 9, Interscience Publishers, New York, London, Sydney 1964, S. 33 ff. beschrieben, wurden verschiedene Polycarbonate synthetisiert.

Als Copolycarbonat (A) wurde ein Polycarbonat mit 30 mol-% Dihydroxydiphenyl (DOD) und 70 mol-% Bisphenol A hergestellt. Als Kettenabbrecher wurde tert-Butylphenol verwendet. Das Granulat weist eine relative Lösungsviskosität von 1,30 auf.

Als Bisphenol A-Polycarbonat (B) wurden Polycarbonate unterschiedlichen Molekulargewichts, ausgedrückt in der relativen Lösungsviskosität (eta rel), verwendet.

Bei Beispiel 5 wurde zusätzlich als Additiv 0,1 Gew.% Titandioxid (Kronos 2230) zugegeben.

Im Vergleichsbeispiel 2 wurde ein Copolycarbonat mit 25 mol-% Dihydroxydiphenyl (DOD) und 75 mol-% Bisphenol A hergestellt. Das Granulat weist eine relative Lösungsviskosität von 1,30 auf.

Die relative Lösungsviskosität wurde in Dichlormethan bei einer Konzentration von 5 g/l bei 25°C bestimmt.

Zur Ermittlung der Schlagzähigkeit wurde der Schlagbiegeversuch nach ISO 180/4A verwendet. Dabei wurden jeweils zehn Prüfkörper vermessen. In der Tabelle 1 ist der Wert angegeben, den die Mehrzahl der Prüfkörper aufwies.

Die Compoundierung zum Blend erfolgte auf einer ZSK 32 bei 300°C und einem Durchsatz von 10 kg/h.

Die Ergebnisse der Tieftemperaturzähigkeit sind in Tabelle 1 zusammengefasst.

Wie in der Tabelle 1 dargestellt, zeigt sich eine Verbesserung der Tieftemperaturzähigkeit bereits bei geringen Anteilen von (A) im Vergleich zum reinen Makrolon. Auch eine weitere Additivierung der Blends hebt den positiven Effekt nicht auf. Dagegen zeigt ein reines Copolycarbonat (A) mit weniger Anteil (I) diese Verbesserung nicht.

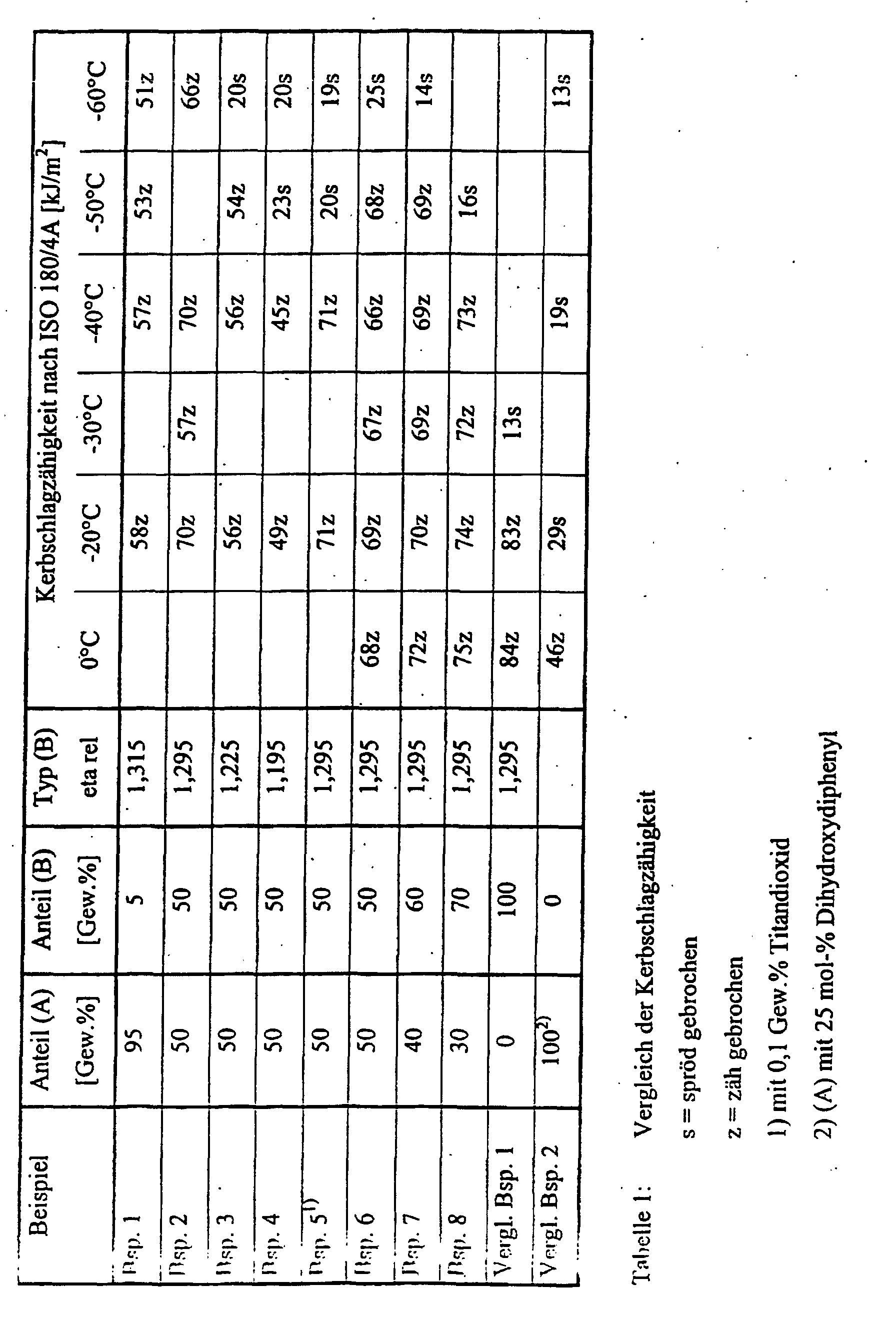

## Patentansprüche

1. Polycarbonat-Blends, enthaltend 1 bis 99 Gew.% Copolycarbonat (A), das aus 0,1 mol-% bis 46 mol-%, Verbindungen der Formel (I), 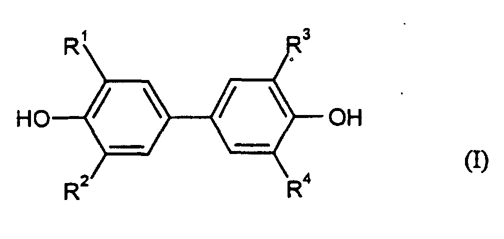 worin R¹ bis R⁴ unabhängig voneinander für H, C₁-C₄-Alkyl, Phenyl, substituiertes Phenyl oder Halogen stehen und komplementären Mengen, also 99,9 mol-% bis 54 mol-%, an Verbindungen der Formel (II) 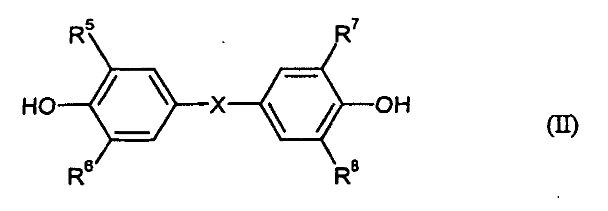 worin R⁵ bis R⁸ unabhängig voneinander H, CH₃, Cl oder Br sind und X C₁-C₅-Alkylen, C₂-C₅-Alkyliden, C₅-C₆-Cycloalkylen, C₅-C₁₀-Cycloakyliden ist, als Bisphenol-Monomere aufgebaut ist, und 1 bis 99 Gew.% reinem Bisphenol A-Polycarbonat (B).

2. Polycarbonat-Blends gemäß Anspruch 1, **dadurch gekennzeichnet, dass** (A) aus 34-26 mol-% an Bisphenol-Monomer der Formel (I), sowie einem komplementären Gehalt an Bisphenol-Monomer der Formel (II) aufgebaut sind.

3. Polycarbonat-Blends gemäß Anspruch 2, **dadurch gekennzeichnet, dass** das Monomer der Formel (I) Dihydroxydiphenol und das Monomer der Formel (II) Bisphenol A darstellt.

4. Polycarbonat-Blends gemäß Anspruch 1, **dadurch gekennzeichnet, dass** (A) zu 30 bis 95 Gew.% und (B) zu 70 bis 5 Gew.% enthalten ist.

5. Verwendung von thermoplastischen Polycarbonat-Blends gemäß Anspruch 1 als Werkstoffe in Bereichen in denen besonders gute Tieftemperatureigenschaften gefragt sind.

6. Verwendung der Polycarbonat-Blends gemäß Anspruch 1 zur Herstellung von Formkörpern und Extrudaten.

7. Formkörper und Extrudate aus Polycarbonat-Blends gemäß Anspruch 1.

8. Verwendung der Polycarbonat-Blends gemäß Anspruch 1 für optische Anwendungen.

9. Verwendung der Polycarbonat-Blends gemäß Anspruch 1 für medizinische und Lebensmittelanwendungen und Folien.

10. Verwendung der Polycarbonat-Blends gemäß Anspruch 1 im Automobilbereich und Außenanwendungen.

11. Verwendung der Polycarbonat-Blends gemäß Anspruch 1 im Elektrobereich.

## Claims

1. Polycarbonate blends containing from 1 to 99 wt.% of copolycarbonate (A), which consists of from 0.1 mol% to 46 mol% of compounds of formula (I) 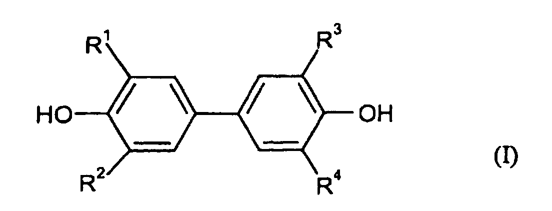 wherein R¹ to R⁴ each independently of one another represents H, C₁-C₄-alkyl, phenyl, substituted phenyl or halogen, and complementary amounts, that is from 99.9 mol% to 54 mol%, of compounds of formula (II) 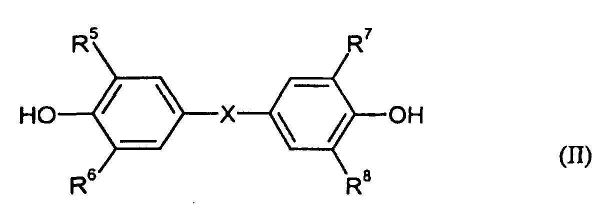 wherein R⁵ to R⁸ are each independently of one another H, CH₃, Cl or Br and X is C₁-C₅-alkylene, C₂-C₅-alkylidene, C₅-C₆-cycloalkylene, C₅-C₁₀-cycloalkylidene, as bisphenol monomers, and from 1 to 99 wt.% of pure bisphenol A polycarbonate (B).

2. Polycarbonate blends according to claim 1, **characterised in that** (A) consists of from 34 to 26 mol% of bisphenol monomer of formula (I) and a complementary content of bisphenol monomer of formula (II).

3. Polycarbonate blends according to claim 2, **characterised in that** the monomer of formula (I) is dihydroxydiphenol and the monomer of formula (II) is bisphenol A.

4. Polycarbonate blends according to claim 1, **characterised in that** (A) is present in an amount of from 30 to 95 wt.% and (B) is present in an amount of from 70 to 5 wt.%.

5. Use of thermoplastic polycarbonate blends according to claim 1 as materials in fields in which particularly good low-temperature properties are sought.

6. Use of the polycarbonate blends according to claim 1 in the production of moulded bodies and extrudates.

7. Moulded bodies and extrudates produced from polycarbonate blends according to claim 1.

8. Use of the polycarbonate blends according to claim 1 for optical applications.

9. Use of the polycarbonate blends according to claim 1 for medical and foodstuffs applications and for films.

10. Use of the polycarbonate blends according to claim 1 in the automotive field and exterior applications.

11. Use of the polycarbonate blends according to claim 1 in the electrical field.

## Revendications

1. Mélanges de polycarbonates contenant 1 à 99 % en poids de copolycarbonate (A), qui est constitué comme monomère de bisphénol, à partir de 0,1 à 46 mol % de composés de la formule (I), 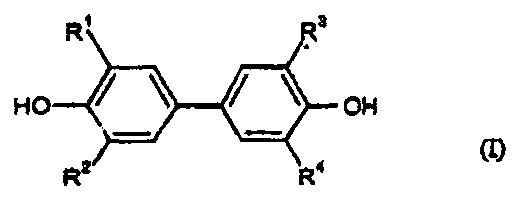 dans laquelle R¹ à R⁴ représentent, indépendamment les uns des autres, H, un alkyle en C₁-C₄, un phényle, un phényle substitué ou un halogène, et de proportions complémentaires, c'est-à-dire 99,9 à 54 mol % de composés de la formule (II), 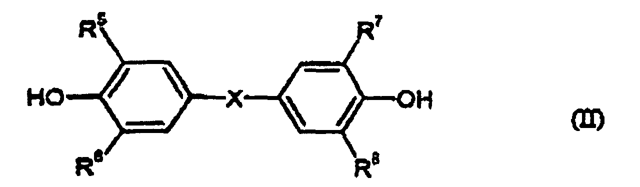 dans laquelle R⁵ à R⁸ représentent, indépendamment les uns des autres, H, CH₃, Cl ou Br et X correspond à un alkylène en C₁-C₅, un alkylidène en C₂-C₅, un cycloalkylène en C₅-C₆, ou un cycloalkylidène en C₅-C₁₀, et 1 à 99 % en poids de polycarbonate de bisphénol A pur (B).

2. Mélanges de polycarbonates selon la revendication 1, **caractérisés en ce que** (A) est constitué de 34 à 26 mol % de monomère de bisphénol de la formule (I) et d'un contenu complémentaire en monomère de bisphénol de la formule (II).

3. Mélanges de polycarbonates selon la revendication 2, **caractérisés en ce que** le monomère de la formule (I) est du dihydroxydiphénol et le monomère de la formule (II) est du bisphénol A.

4. Mélanges de polycarbonates selon la revendication 1, **caractérisés en ce que** (A) est contenu à raison de 30 à 95 % en poids et (B) à concurrence de 70 à 5 % en poids.

5. Utilisation de mélanges de polycarbonates thermoplastiques selon la revendication 1, comme matériaux dans des domaines dans lesquels des caractéristiques à basse température particulièrement favorables sont demandées.

6. Utilisation des mélanges de polycarbonates selon la revendication 1 pour fabriquer des pièces moulées et des produits d'extrusion.

7. Pièces moulées et produits d'extrusion en mélanges de polycarbonates selon la revendication 1.

8. Utilisation des mélanges de polycarbonates selon la revendication 1 pour des applications optiques.

9. Utilisation des mélanges de polycarbonates selon la revendication 1 pour des applications médicales et alimentaires et des feuilles.

10. Utilisation des mélanges de polycarbonates selon la revendication 1 dans le secteur automobile et pour des applications extérieures.

11. Utilisation des mélanges de polycarbonates selon la revendication 1 dans le secteur électrique.
